(19) Europäisches Patentamt
European Patent Office
Office européen des brevets

(11) **EP 3 061 590 A1**

(12) **EUROPEAN PATENT APPLICATION**
published in accordance with Art. 153(4) EPC

(43) Date of publication:
**31.08.2016 Bulletin 2016/35**

(21) Application number: **14855077.5**

(22) Date of filing: **20.10.2014**

(51) Int Cl.:
*B29C 53/04* (2006.01)  *B29C 55/06* (2006.01)
*B29L 7/00* (2006.01)

(86) International application number:
**PCT/JP2014/077877**

(87) International publication number:
**WO 2015/060271 (30.04.2015 Gazette 2015/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.10.2013 JP 2013218615**

(71) Applicant: **TBM Co., Ltd.
Tokyo 100-0005 (JP)**

(72) Inventor: **SUMI, Yuichiro
Tokyo 168-0064 (JP)**

(74) Representative: **Papula Oy
P.O. Box 981
00101 Helsinki (FI)**

(54) **PROCESS FOR MANUFACTURING FILLER-CONTAINING PLASTIC SHEET**

(57) The purpose of the present invention is to provide a process for manufacturing a plastic sheet, said process being capable of improving the strength and breaking elongation (elongation rate) of a raw material plastic sheet having a high filler content, and thereby improving the tolerance of processing conditions. A process for manufacturing a plastic sheet which includes a bending step comprising: bringing, in the course of transferring a raw material plastic sheet that contains a filler in an amount of 50 to 85mass% in the flow direction, the raw material plastic sheet into contact with the surface of a solid object in such a way that the sheet is pushed against the surface of the solid object; thereby making the sheet bent in the contact zone, and generating a stress that affects the inside of the sheet; and thus treating the sheet.

[Fig.3]

**Description**

TECHNICAL FIELD

The present invention relates to a process for manufacturing a filler-containing plastic sheet.

BACKGROUND ART

In recent years, a plastic sheet having an inorganic substance added has been proposed as environment-friendly synthetic paper and started to be practically used because an inorganic substance as raw material thereof is easily available anywhere (see Patent Documents 1 and 2). In order to allow such a plastic sheet to be widely used as paper, it is necessary to adjust its apparent specific gravity in an appropriate range. Thus, a manufacturing process including drawing a raw material plastic sheet with an inorganic substance added therein, and thereby adjusting specific gravity has been proposed.

The plastic sheet has characteristics that use of thermoplastic resin makes recycling possible and, in addition, increasing of the content of the above-mentioned filler made of inorganic substance enables the content of the material derived from petroleum raw material to be reduced, thus enabling load on environment to be reduced.

On the other hand, when the content of the filler in the plastic sheet is increased, in usual manufacturing conditions, the sheet becomes hard and fragile, and the plastic sheet breaks immediately when a tensile stress is applied during manufacture of the plastic sheet. Therefore, in general, in a plastic sheet having a high filler content, tolerance is small in setting the conditions for drawing processing and the like, processing is difficult, or adjustable ranges of physical properties such as apparent specific gravity, whiteness degree, and opacity degree in a final product have been limited.

Patent Document 1: Japanese Unexamined Patent Application, Publication No. H11-277623
Patent Document 2: Japanese Unexamined Patent Application, Publication No. 2013-10931

DISCLOSURE OF THE INVENTION

Problems to be Solved by the Invention

The present invention has been made in light of the above-mentioned situation, and an object of the present invention is to provide a process for manufacturing a plastic sheet, the process capable of improving the strength and the breaking elongation (elongation rate) of a raw material plastic sheet having a high filler content and thereby improving the tolerance of processing conditions.

Means for Solving the Problems

The present inventors have found that applying normal force locally to a raw material plastic sheet having a high filler content while drawing the sheet in the flow direction so as to change an internal structure of the raw material plastic sheet enables the strength and breaking elongation (elongation rate) of the raw material plastic sheet to be improved, and have completed the present invention.

A process for manufacturing a plastic sheet of the present invention includes a bending step including: bringing a raw material plastic sheet that contains filler in an amount of 50 mass% or more and 85 mass% or less into contact with a surface of a solid object in such a manner that the sheet is pushed against the surface of the solid object while drawing the sheet in the flow direction; allowing the sheet to be bent in the contact part for generating a stress that acts on the inside of the sheet; and thus treating the raw material plastic sheet.

Effects of the Invention

The present invention can provide a process for manufacturing a plastic sheet, and the process improves the strength and the breaking elongation (elongation rate) of a plastic sheet having a high filler content, and thereby improves the tolerance of processing conditions.

BRIEF DESCRIPTION OF THE DRAWINGS

Fig. 1 is a view schematically showing a section of a solid object in accordance with one embodiment of the present invention.

Fig. 2 is a view schematically showing a section of a solid object in accordance with another embodiment of the present invention.

Fig. 3 is a view schematically showing a process for manufacturing a plastic sheet in accordance with one embodiment of the present invention.

PREFERRED MODE FOR CARRYING OUT THE INVENTION

Below, the embodiments of the present invention will be explained in detail. However, the present invention is not limited to the following embodiments, and can be practiced by adding modification as needed, provided that the modification is in a range of the objects of the present invention.

A process for manufacturing a plastic sheet of the present invention includes a bending step including: bringing a raw material plastic sheet that contains filler in an amount of 50 mass% or more and 85 mass% or less into contact with a surface of a solid object in such a manner that the sheet is pushed against the surface of the solid object, in the course of transferring the sheet in the flow direction; allowing the sheet to be bent in the contact part for generating a stress that acts on the inside of the sheet; and thus treating the raw material plastic sheet.

Hereinafter, a process for manufacturing a plastic sheet in accordance with the present invention will be explained in detail.

A raw material plastic sheet of the present invention and a plastic sheet manufactured by a manufacturing process of the present invention contain at least thermoplastic resin and filler. Furthermore, in the present invention, the raw material plastic sheet refers to a plastic sheet before undergoing a step specified in the present invention.

As the thermoplastic resin used in the present invention, for instance, one or more resins selected from the group consisting of polyethylene, polypropylene, polystyrene and polyethylene terephthalate can be used. As the thermoplastic resin, it is preferable to select, in particular, crystalline thermoplastic resin, and, above all, to select olefin resin.

In addition, from the viewpoint of easiness of manufacturing, it is preferable to use a thermoplastic resin with a melt mass flow rate of 0.02 to 0.5 g/10 min. in an amount of 50% by weight or more and 100% by weight or less relative to the total thermoplastic resin, and as the balance, a thermoplastic resin with a melt mass flow rate of 0.5 to 1.2 g/10 min. From the viewpoint of strength of the obtained plastic sheet, polyethylene resin is preferably used, and in particular, high density polyethylene resin is more preferably used. It is also preferable to use a hard resin, such as polystyrene, in combination with the above-mentioned polyethylene resin, in order to increase rigidity of the plastic sheet.

Note that in this specification, a value of the melt mass flow rate means a value measured according to JIS K 7210: 1999 "Testing method for Melt Mass Flow Rate (MFR) of plastics - thermoplastic plastic" (wherein, test temperature: 190°C).

As a filler used in the present invention, powder of inorganic substances which may be conventionally added to plastic products as filling material, such as calcium carbonate, titanium oxide, silica, clay, talc, kaolin, and aluminum hydroxide, may be used without particular limitation. Resin particle powder that is not compatible with thermoplastic resin can be used as a filler. In this case, however, in order to improve dispersibility in the plastic sheet, it is preferable to modify the surface of such filler according to conventional methods in advance.

In order to adjust the surface roughness of the plastic sheet in an appropriate range, and to prevent large filler particles from separating from the surface of the plastic sheet, it is preferable that a coarse particle having a particle diameter of 50 $\mu$m or more is not contained in the particle size distribution range. On the other hand, if the filler particles are too fine, the viscosity increases considerably when the filler particles are kneaded with the thermoplastic resin, thus making it difficult to manufacture a raw material plastic sheet. Therefore, the average particle size is preferably 0.5 $\mu$m or more.

It is noted that the particle size of the filler in the present invention is a 50% particle size (d50), which is obtained from the cumulative percent distribution curve measured on a laser diffraction particle size distribution analyzer.

The raw material plastic sheet of the present invention can be manufactured by mixing the above-mentioned thermoplastic resin and filler in a weight ratio ranging from 50:50 to 15:85 by using well-known methods, which are conventionally used for general purposes, for example, a calender method, an extrusion method, an inflation method, and the like. For example, the raw material plastic sheet can be manufactured by feeding the thermoplastic resin and filler directly into an extrusion molding machine equipped with a twin screw, kneading them, and molding them into a sheet shape; and also can be once manufactured by feeding the thermoplastic resin and filler into an extrusion molding machine equipped with a twin screw and kneading them into an intermediate product such as a pellet, and then feeding the intermediate product into the molding machine to mold them into a sheet shape.

When each material is mixed in the above-mentioned weight ratio, it is possible to enhance the whiteness degree and the opacity degree of a sheet after extrusion molding. Consequently, the resulting sheet can be used not only in the field of paper but also in processing of new material with the use of its specific properties. Furthermore, if the plastic sheet is provided with drawing property, when the sheet is drawn, it is possible to relatively easily set an amount of pore generated in the vicinity of the filler in an appropriate range, and therefore of the apparent specific gravity, the whiteness degree, the opacity degree, and the like, of a plastic sheet as a final product can be adjusted in a desired range.

The advantageous effect of the bending treatment of the present invention mentioned below is remarkably exhibited in a sheet containing filler in an amount of 50 mass% or more. Filling of filler reduces the strength of a molded sheet with the increase of the filling amount, and the tendency is represented by numeric values of the tensile strength and the elongation rate, and the experiment results by the present inventors clarify the following phenomena.

When a sheet containing a filler in an amount of 50 mass% is subjected to bending treatment, the tensile strength and the elongation rate in a TD direction (a direction perpendicular to the flow direction at the time of extrusion molding) of the sheet are increased. When the filler is contained in an amount of 60 mass%, the tensile strength and the elongation rate not only in the TD direction but also in the MD direction (the flow direction at the time of extrusion molding) of the sheet are clearly increased. When the filling rate of filler is 70 mass%, the effect of the bending treatment becomes further remarkable.

In the above-mentioned methods, when the productivity, the mechanical property of the resulting raw material plastic sheet, easiness of controlling the film thickness, applicability to various resins, and the load on the environment, and the like, are considered, the method by melt extrusion molding is preferable. Inter alia, in order to change a sheet structure so as to arbitrarily adjust apparent specific gravity and the like, it is preferable that, firstly, a raw material plastic sheet is manufactured by extrusion molding in the T-die method.

For the production of the above-mentioned raw material plastic sheet, a method is applicable in which the above constituent material in a predetermined blending ratio is fed into a kneading and extrusion-molding machine to which a T-die is set, the constituent material is melt-kneaded, and directly formed into a film in the same machine. In addition, it is also possible to produce a raw material plastic sheet by once feeding the constituent material in a predetermined blending ratio into a kneading and extrusion-molding machine, melt-kneading the constituent material to be formed into pellets, feeding the resulting pellets (compound) into another extrusion molding machine in which a T-die is set so as to be formed into a film. An extruder to be used is particularly preferably a twin-screw extruder, because the action of its strong shear force enables these components to be melted and dispersed uniformly, and as a result, a sheet having high filler content can be easily obtained. In a case where there is no problem with the dispersibility of components to be combined, it is also possible to carry out sheet formation in a single-screw extrusion molding machine.

In addition to the thermoplastic resins and the filler, the raw material plastic sheet of the present invention and a plastic sheet manufactured by the manufacturing process of the present invention can contain one or more auxiliary agents selected from the group consisting of lubricants, antioxidants, ultraviolet ray absorbers, coloring pigments, dispersing agents, antistatic agents, flame retardants or the like within a range in which the addition is not contrary to the purpose. The auxiliary agents which are considered to be particularly important among these will be described below by mentioning examples, but the auxiliary agents are not limited thereto.

Examples of lubricants include aliphatic acid-based lubricants such as stearic acid, hydroxystearic acid, stearic acid of complex type and oleic acid, aliphatic alcohol-based lubricants, stearamide, oxy stearamide, oleylamide, erucylamido, ricinolic amide, behenamide, methylol amide, methylenebis-stearamide, methylenebis-stearobehenic amide, bisamide acid of higher aliphatic acids, aliphatic amide-based lubricants such as amide of complex type, etc. n-butyl stearate, methyl hydroxystearate, polyhydric alcohol aliphatic acid esters, saturated fatty acid esters, aliphatic ester-based lubricants, such as ester waxes, aliphatic acid metal soap-based lubricants or the like. These can be used alone or in combination of two or more.

As antioxidants, phosphorus-based antioxidants, phenol-based antioxidants and pentaerythritol-based antioxidants can be used. Phosphorus-based antioxidants, more specifically, phosphorus-based antioxidant stabilizers such as phosphite esters or phosphate esters, etc. are preferably used. Examples of phosphite esters include triesters, diesters, and monoesters, etc. of phosphite acid, such as triphenyl phosphite, tris(nonylphenyl) phosphite, and tris(2,4-di-tert-butylphenyl) phosphite, etc.

Phosphate esters include trimethyl phosphate, triethyl phosphate, tributyl phosphate, trioctyl phosphate, triphenyl phosphate, tricresyl phosphate, tris(nonylphenyl) phosphate, 2-ethylphenyl diphenyl phosphate, etc. These phosphorus-based antioxidants may be used alone or in combination of two or more.

Examples of phenol-based antioxidants include $\alpha$-tocopherol, butylated hydroxytoluene, sinapyl alcohol, vitamin E, n-octadecyl-3-(3,5-di-tert-butyl-4-hydroxyphenyl) propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl) phenol, 3,5-di-tert-butyl-4-hydroxy benzyl phosphonate diethyl ester and tetrakis[3-(3,5-di-tert-butyl-4-hydroxyphenyl) propionyloxymethyl] methane. These may be used alone or in combination of two or more.

Regarding the average thickness of the raw material plastic sheet of the present invention, any thickness may be selected, depending on applications or in consideration of draw ratio after sheet formation. Considering the thickness of the final plastic sheet made of the raw material plastic sheet, the average thickness of the raw material plastic sheet is preferably in the range of 50 $\mu$m or more and 400 $\mu$m or less, and more preferably 100 $\mu$m or more and 300 $\mu$m or

less. The average thickness of the raw material plastic sheet of more than 50 $\mu$m enables sufficient breaking elongation to be secured, improves the tolerance with respect to the drawing processing, and thus makes it easy to adjust the physical properties of the plastic sheet in a desired range. Furthermore, when the thickness is less than 400 $\mu$m, the final product can be adjusted to an appropriate thickness, load necessary for drawing does not become too large, and thus drawing processing becomes easy.

Note here that in order to precisely obtain an average thickness of the sheet of the present invention, thicknesses at arbitrarily selected ten different points in the molded sheet are measured with a Dial Gauge Micrometer capable of applying a constant pressure, and the resulting values are averaged to obtain the average thickness.

Since the above-mentioned raw material plastic sheet has a high filler content, the sheet is hard and fragile, so that it is impossible or extremely difficult to subject the sheet to processing such as drawing in usual manufacturing conditions and the tolerance of processing conditions is extremely small.

The present inventors have found that addition of the below-mentioned bending step to the above-mentioned raw material plastic sheet can unexpectedly provide hard and fragile raw material plastic sheet with sufficient flexibility, resulting in enabling the tolerance of the subsequent treatment conditions to be improved.

The present invention includes a bending step of pushing a long solid object such as a stick, a plate, or a beam against the surface of the above-mentioned raw material plastic sheet in such a manner that the longer direction of the long object crosses the flow direction (the machine direction, the MD direction) of the sheet, and thereby bending the above-mentioned raw material plastic sheet. At that time, it is preferable that a stress is applied in a manner in which the above-mentioned object and the above-mentioned raw material plastic sheet are moved relative to each other in a bending state in which the above-mentioned raw material plastic sheet is bent at a portion in which the object is brought into contact with the raw material plastic sheet.

In the present invention, it is necessary to carry out the bending with respect to the front surface or the rear surface of the raw material plastic sheet at least once. The bending can be carried out with respect to any one or both of the front surface and the rear surface of the raw material plastic sheet. However, since bending to only one surface of the raw material plastic sheet may cause warping in the plastic sheet, it is necessary to pay attention to warping and it is preferable to carry out bending with respect to both surfaces of the sheet from the viewpoint of preventing warping.

When the bending is carried out with respect to both the front surface and the rear surface of the sheet, the bending can be carried out with respect to the front surface and the rear surface in succession, or be firstly carried out to one surface of the front surface and the rear surface, and then be carried out to the other surface. Furthermore, the raw material plastic sheet is wound up to a roller to produce an original fabric roll once, and then the original fabric roll can be subjected to the bending, and manufacturing of the raw material plastic sheet and the bending can be carried out in succession.

It is effective to employ a long member as the solid object of the present invention, because the solid object is brought into contact with raw material plastic sheet having various widths and pushed against the raw material plastic sheet with constant pressing force. Specifically, a member having shapes such as a stick shape, a plate shape, or a beam shape can be employed. When a plate member is used, the end portion thereof is used as a site for pressing. In order to apply a pressure without variations to each position in the width direction of the raw material plastic sheet, it is preferable that the length in the longitudinal direction of the solid object is sufficiently longer than the length in the width direction (CD direction) of the raw material plastic sheet, and the solid object is disposed so as to cross the flow direction of the raw material plastic sheet. At this time, it is preferable that the longitudinal direction of the solid object and the flow direction of the raw material plastic sheet are perpendicular or substantially perpendicular to each other from the viewpoint of applying a pressure without variations to each position in the width direction of the raw material plastic sheet. It is desirable that an angle made by the longitudinal direction of the solid object and the flow direction of the raw material plastic sheet be a right angle, but, for example, the angle can be set in the range of $\pm 20$ degrees, preferably $\pm 10$ degrees, and more preferably $\pm 5$ degrees with respect to the right angle.

Material of the solid object in the present invention is not particularly limited and can be selected from well-known material depending upon purposes. For instance, SUS and other various metal material, and FRP may be used, but the material is not limited thereto. In order to apply uniform stress without variations in the width direction of the raw material plastic sheet, it is preferable that material with high rigidity is selected as the material of the solid object.

A cross-sectional shape of the solid object of the present invention seen from the longitudinal direction is not particularly limited and can be circular, elliptical, triangular, rectangular, and other polygonal shapes. Use of triangular, rectangular, or other polygonal shapes also enables two or more bending to be carried out simultaneously to one solid object and the like.

In addition, it is desirable that a cross-sectional shape of a portion in which the a solid object and the raw material plastic sheet are brought into contact with each other have a corner portion having an acute angle to such a degree that the sheet does not break, or an R portion having a small radius of curvature. The above-mentioned shape of the portion in which the solid object is brought into contact with the raw material plastic sheet makes it possible to apply sufficient normal force (force applied in the thickness direction of the film) to the raw material plastic sheet, resulting in improving the workability with respect to the raw material plastic sheet.

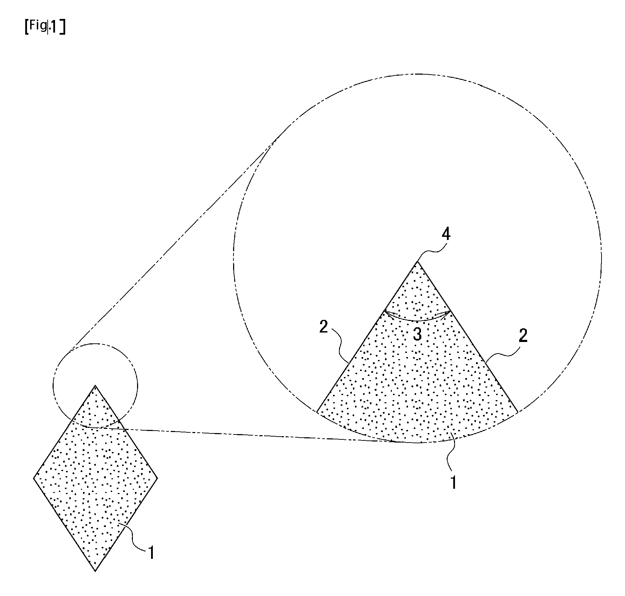

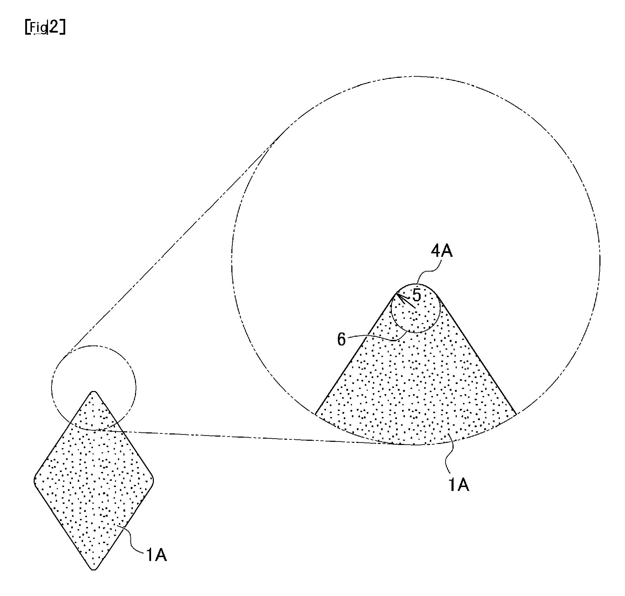

The above-mentioned solid object will be described with reference to Figs. 1 and 2. Fig. 1 is a sectional view of a polygonal solid object (1) and an enlarged view of the contact part thereof. A corner portion of the contact part will be further described. The corner portion refers to a protruding portion of the solid object having a polygonal cross-sectional shape, and consists of a vertex (4) and two sides (2) that interpose the vertex (4). The angle of the corner portion is an angle (3) made by the two sides (2) constituting the corner portion.

Subsequently, the R portion of the solid object will be described. The R portion of the solid object is a tip of a solid object (1A) having an elliptical cross-sectional shape or a contact part of the solid object having a circular shape. When the solid object has an elliptical shape, the radius of curvature thereof is a radius of a circle inscribed in the vertex at a tip of the elliptical shape. Furthermore, as shown in Fig. 2, the R portion includes one having a rounded contact part in the solid object whose cross-sectional shape is polygonal. In this case, the radius of curvature is a radius (5) of a circle (6) inscribed in a vertex (4A) of the contact part.

When the solid object has a corner portion, it is preferable that an angle of the corner portion is 6 degrees or more and 120 degrees or less in a sectional view of the contact part parallel to the flow direction of the raw material plastic sheet. The angle is further preferably 20 degrees or more and 90 degrees or less, and desirably 45 degrees or more and 60 degrees or less. When the above-mentioned angle is 6 degrees or more, the raw material plastic sheet can be bent without being damaged, and when the angle is 120 degrees or less, it is possible to apply sufficient normal force to the entire raw material plastic sheet. In order to provide larger normal force, it is preferable that the angle is an acute angle, that is, 90 degrees or less.

Furthermore, when the solid object has an R portion, it is preferable that a radius of curvature is 50 mm or less in a sectional view of the contact part parallel to the flow direction of the raw material plastic sheet. The radius of curvature is further preferably 10 mm or less, and desirably 2.0 mm or less. When the radius of curvature of the R portion is 50 mm or less, the contact pressure per unit area of the contact part is sufficient, so that necessary normal force can be applied to the sheet. Furthermore, the radius of curvature does not particularly have the lower limit value, but in order to prevent problems such as abrasion due to rubbing of the sheet, the radius of curvature is preferably 0.5 mm or more.

Bending in a state in which the raw material plastic sheet is bent at a contact part with the solid object while drawing the raw material plastic sheet enables the strength and the breaking elongation of the raw material plastic sheet having a high filler content to be improved.

This mechanism is determined as follows: when strong normal force acts by the contact of the solid object during a course in which a tensile stress acts on the inside of the raw material plastic sheet, a normal stress acts in the thickness direction of the raw material plastic sheet, resulting in generating a shear stress in the flow direction of the sheet and loosening the inside structure of the sheet.

The bending of the present invention may use only one solid object or may use two or more solid objects at the same time.

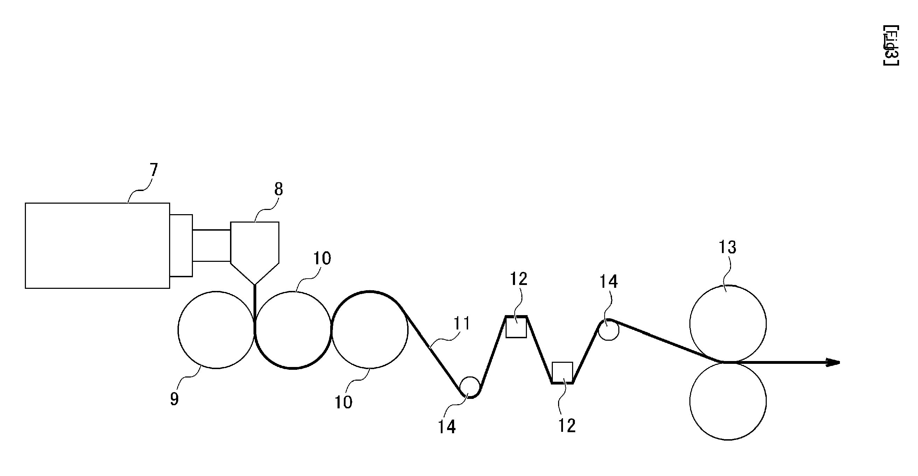

Subsequently, a process for manufacturing a plastic sheet in accordance with the present invention will be described more specifically with reference to Fig. 3, but the present invention is not limited to this. The above-mentioned material is fed into a kneading and extrusion molding machine equipped with a twin screw (7) in a predetermined blending ratio, heated, melted, and kneaded. The biaxial kneading and extruding machine allows strong shearing force to act on the fed raw material, and to disperse each component uniformly. The material which has been fed into the kneading and extrusion-molding machine (7) and melted is supplied between a pressurizing roller (9) and a taking-up roller (10) from a T-die (8), formed into a sheet, and molded into a sheet shape to thus form a raw material plastic sheet (11). By adjusting the speed of the pressurizing roller (9) and the taking-up roller (10) and a gap between the both rollers, the raw material plastic sheet (11) can be adjusted to have any thickness.

A plurality of long solid objects (12), which have been fixed to a frame (not shown), is provided on the tip of the taking-up roller (10), and the raw material plastic sheet (11) is introduced between the solid objects (12). Winding-up rollers (13) are provided on the tip of the solid object (12), the raw material plastic sheet (11) is taken up in the direction shown by an arrow with the rotation of the winding-up roller (13). A guide roller (14) may be provided before and behind the solid object (12).

The long solid object (12) is disposed such that the longitudinal direction of the long solid object (12) crosses the flow direction of the raw material plastic sheet (11), and the movement direction of the raw material plastic sheet (11) is changed with an angle such that the raw material plastic sheet (11) is bent at a portion in which the solid object (12) is brought into contact with the raw material plastic sheet (11). In Fig. 3, a cross-sectional shape of the solid object (12) is a rectangle, and the movement direction of the raw material plastic sheet (11) is changed such that the raw material plastic sheet (11) is bent at two corner portions of the solid object (12).

In Fig. 3, normal force and a shear stress acted on the raw material plastic sheet (11) by the solid object (12) are strengthened by tensile strength acting on the raw material plastic sheet (11) based on speed difference generated by making the rotation of winding-up roller (13) higher than that of the taking-up roller (10).

It is preferable that the rotation speeds and the ratio of the taking-up roller (10) and the winding-up roller (13) are determined considering a size of the stress acting on the raw material plastic sheet (11). Furthermore, when the raw material plastic sheet taken up from the outlet of a die of an extruder is directly subjected to the bending, it is necessary to determine the speed of the winding-up roller depending upon the taken-up speed from the outlet of the die.

The difference between the rotation speed of the taking-up roller (10) and the rotation speed of the winding-up roller (13) is preferably in the range of 0.08 m/min or more and 2.0 m/min or less, but it is necessary to determine an optimal rotation speed difference based on the history (conditions such as immediately after the extrusion molding, after long-term storage, and the like) of the raw material plastic sheet to be subjected to bending.

In Fig. 3, the raw material plastic sheet that has undergone the above-mentioned bending step can be once wound up to the roller to obtain a rolling original fabric, and also the raw material plastic sheet as it is may be consecutively introduced into a well-known drawing machine (not shown) and drawn to form a rolling original fabric.

In the above, moving the raw material plastic sheet in the flow direction is mainly described, but an embodiment in which a tensile stress is applied to the inside of the sheet by moving the solid object with the raw material plastic sheet fixed, is possible.

The raw material plastic sheet which has undergone the step of bending is drawn in either the flow direction or the width direction, or in the both directions, and thereby the properties such as the apparent specific gravity, the whiteness degree, the air permeability, and the water absorbing capacity, and the like, of the plastic sheet as a final product can be adjusted to the desired range.

The above-mentioned drawing step is carried out by drawing the raw material plastic sheet that has undergone the bending step in at least one direction of the flow direction or the width direction, and, as a result, a uniaxially drawn film, or a biaxially drawn film are provided. Biaxial drawing methods include sequential biaxial drawing and simultaneous biaxial drawing, and any of them can be employed.

The draw ratio of the raw material plastic sheet after the bending step is determined considering the purpose of use of the plastic sheet and properties of the thermoplastic resin to be used. Since the raw material plastic sheet of the present invention has a high filler content, the draw ratio is preferably 1.2 times or more and 4.0 times or less, and further preferably 1.5 times or more and 3.0 times or less.

The required draw ratio can also be calculated by way of calculation. The weight per 1 square meter (also referred to as basis weight) $W$ (g/m$^2$) of the plastic sheet prior to subjecting to drawing is measured, and by using the apparent specific gravity $D$ and the aspect ratio (ratio of draw ratios in longitudinal direction and horizontal direction) $R$ of the product established in production planning, and the target value $T$ (cm) for the thickness of the product after horizontal drawing, the draw ratios (longitudinal direction $X$ times, horizontal direction $Y$ times) are decided depending upon the following equation, and drawing can be performed. Further, the required draw ratio can be easily estimated based on operational experience by equipment to equipment.

$$X^2 = W \times 10^{-4} / (D \times Z \times R \times T)$$

$$X = RY$$

In the formula, $D$: apparent specific gravity of the product established in production planning;
$R$: aspect ratio established in production planning (ratio of draw ratios in longitudinal direction and horizontal direction);
$W$: weight per one square meter (g) of the sheet prior to subjecting to longitudinal drawing;
$X$: draw ratio in longitudinal direction;
$Y$: draw ratio in horizontal direction;
$Z$: the contraction ratio or extension ratio of the length in the horizontal direction of the sheet due to longitudinal drawing.

When this drawing is performed at a temperature which is about 30°C to 40°C lower than the melting point of thermoplastic resin to be used, pores are likely to be formed in the plastic sheet, so that the apparent specific gravity can be more reduced to make the plastic sheet approximate to plain paper, which is preferable. In particular, in a case where a high density polyethylene resin is used as the thermoplastic resin, drawing is preferably performed at 95°C or more and 105°C or less.

As the pores are formed during the drawing, the specific gravity of the plastic sheet decreases. Further, upon combining longitudinal drawing with horizontal drawing and increasing the draw ratios appropriately, the formed independent pores are linked to each other, so that continuous pores are partly formed, and thereby it is possible to largely change properties such as air permeability, and water absorbing capacity.

The average thickness of a plastic film after undergoing the above-mentioned drawing processing can be set depending on the purpose of use. In application of use in the field of paper, usually, the thickness is suitably 30 $\mu$m or

more and 350 μm or less, and preferably 80 μm or more and 300 μm or less. The thickness is preferably at least 30 μm or more because it makes the mechanical property of the plastic film sufficient.

It is desirable to surface-modify both or one surface of the plastic sheet formed by the process of the present invention, depending upon purposes. As such surface modification, many treatment methods are known, such as provision of hydrophilicity, hydrophobicity, gas barrier property, and the like. It is possible to select from these an appropriate method which can provide a desired function.

For instance, in order to render a plastic sheet after undergoing the drawing processing hydrophilic, it is possible to apply a coating treatment of the plastic sheet with a water-based treatment agent containing a water-soluble polymer as a main agent, or to apply oxygen plasma treatment, etc. In the case of former, it is preferable to cross link cation group-containing water-soluble polymers in the water-based treatment agent with a specific amount of water-soluble crosslinking agent. The water-soluble polymers which may be used may be either polymers which are water soluble per se, such as polyvinyl alcohol or polyacrylic acid, or polymers which have been rendered water soluble only after the introduction of various cation groups.

While the degree of hydrophilicity provided to the surface of the plastic sheet varies depending upon the process material which is to be formed later, it is preferable to adjust the contact angle in the determination of water contact angle according to JIS R3257: 1999 to 90 degrees or less, preferably 40 degrees or more and 90 degrees or less. When the water contact angle exceeds 90 degrees, it becomes difficult to form a uniform layer with a process material.

In the case where surface modification is performed for providing various gas barrier properties to plastic film which has undergone the drawing processing, a gas barrier layer including, for instance, silicon oxide is formed on the surface of the plastic film under vacuum. In order to realize a high gas barrier property, plasma chemical vaporization deposition (CVD) is preferable presently, and it is possible to form a film on one side or both sides of the above-mentioned plastic film. At this time, it is preferable to perform continuous vapor deposition in a winding scheme of the plastic film in the form of roll. For instance, it is possible to use a known vacuum vapor deposition film forming apparatus of winding type. Here, as a plasma generator, a low temperature plasma generator including direct current (DC) plasma, low-frequency plasma, high-frequency plasma, pulse wave plasma, tripolar structure plasma, microwave plasma, etc. is used.

The gas barrier layer including silicon oxide laminated by the plasma CVD method can be formed by using a silane compound having carbon in the molecule and oxygen gas as raw materials. It is also possible to form a film by adding an inert gas to these raw materials. As examples of silane compounds having carbon in the molecule, silane compounds with relatively low molecular weight, such as tetraethoxysilane (TEOS), tetramethoxysilane (TMOS), tetramethylsilane (TMS), hexamethyldisiloxane (HMDSO), tetramethyldisiloxane, and methyltrimethoxysilane, etc. can be selected. One or plural of these silane compounds can be used.

In the film formation by the plasma CVD method, a film is formed a film is formed in which the above-mentioned silane compound is vaporized and mixed with oxygen gas to obtain a mixture, and the mixture is introduced between the electrodes, followed by applying electric power by a low temperature plasma generator so as to generate plasma. Here, film properties of the barrier layer can be varied in various methods, for instance, by changing silane compounds, types of gas or mixing ratio of a silane compound and oxygen gas, or by increasing or decreasing applied electric power or the like.

It is possible to obtain a laminate film which can be adapted to wide range of applications by providing a functional layer to the above-mentioned plastic sheet. Examples of the functional layers include, but are not limited to, an ink receiving layer, anti-static layer, a metal layer, a printing coloring layer, and an adhesive layer, etc. Further, it is also possible to form a laminate by selecting plural layers from these.

The plastic sheet obtained by the manufacturing process of the present invention can be used, without limitation, as a substitute for paper such as printing paper, wrapping paper, insulating paper, packaging container, in the field in which paper is usually used.

EXAMPLES

Subsequently, the present invention will be explained in detail based on the Examples, but the present invention will not be limited thereto.

<Comparative Example 1>

Direct molding was performed wherein a high density polyethylene resin and calcium carbonate powder were provided in a mass ratio adjusted to 20:80 and further magnesium stearate was added so that its content was 3 mass% relative to the both raw material, and the mixture was kneaded at setting temperature of 220°C and simultaneously, the raw material plastic sheet was extrusion-molded by using a small-size biaxial kneading and extrusion-molding machine equipped with a T-die (manufactured by TECHNOVEL CORPORATION). After the molded sheet was taken up from the die outlet to a taking-up roller (90°C), wound up to a winding-up roller (30°C) immediately after the sheet was taken up, the rotation speed of the taking-up roller and the rotation speed of the winding-up roller were set at 1.75 m/min, respectively. The average thickness of the resulting plastic sheet was 0.20 mm.

<Comparative Example 2>

A sheet was formed in the same manner as in Comparative Example 1 except that the rotation speed of the taking-up roller and the rotation speed of the winding-up roller ware set at 0.75 m/min, respectively. The average thickness of the resulting plastic sheet was 0.19 mm.

<Example 1>

Rectangular solid objects are provided in two portions between the taking-up roller and the winding-up roller of the small-size biaxial kneading and extrusion-molding machine so as to provide parts for bending with respect to the rear surface and the front surface, as shown in Fig. 3. By using this facility, a sheet was formed in the same manner as in Comparative Example 1 except that the rotation speed of the taking-up roller was set at 1.86 m/min, and the rotation speed of the winding-up roller was set at 2.10 m/min, respectively. Herein, an angle of the corner portion of the solid object is 90 degrees.

The thickness of the raw material plastic sheet before undergoing the bending step was 0.18 mm, while the average thickness of the resulting plastic sheet after undergoing the bending step was 0.11 mm.

<Example 2>

A sheet was formed in the same manner as in Example 1 except that the rotation speed of the taking-up roller was set at 0.78 m/min, and the rotation speed of the winding-up roller was set at 0.88 m/min, respectively. The thickness of the raw material plastic sheet before undergoing the bending step was 0.25 mm, while the average thickness of the resulting plastic sheet after undergoing the bending step was 0.22 mm.

<Example 3>

A sheet was formed in the same manner as in Example 1 except that the rotation speed of the taking-up roller was set at 1.06 m/min, and the rotation speed of the winding-up roller was set at 2.43 m/min, respectively. The thickness of the raw material plastic sheet before undergoing the bending step was 0.20 mm, while the average thickness of the resulting plastic sheet after undergoing the bending step was 0.15 mm.

<Example 4>

A sheet was formed in the same manner as in Example 1 except that the rotation speed of the taking-up roller was set at 1.56 m/min, and the rotation speed of the winding-up roller was set at 2.67 m/min, respectively. The thickness of the raw material plastic sheet before undergoing the bending step was 0.18 mm, while the average thickness of the resulting plastic sheet after undergoing the bending step was 0.13 mm. Evaluation of strength and elongation of plastic sheet after treatment

A stripe test piece having a width of 15 mm was cut out from the above-obtained raw material plastic sheet treated as mentioned above, and was subjected to a tensile test using a tensile tester equipped with 1000 N load cell (manufactured by A&D company ltd.) under the conditions at 25°C or 95°C, at a stretching speed of 500 mm/min, and with a grip spacing of 100 mm to measure the strength and the elongation rate at film breaking. The results are shown in Table 1 as the tensile strength and the elongation rate, respectively.

[Table 1]

| | Rotation speed (m/min) | | Speed difference (m/min) | Speed ratio | Tensile test results (25°C) | | Tensile test results (95°C) | |
| --- | --- | --- | --- | --- | --- | --- | --- | --- |
| | Taking-up roller | Winding-up roller | | | Tensile strength (MPa) | Elongation rate (%) | Tensile strength (MPa) | Elongation rate (%) |
| Example 1 | 1.86 | 2.1 | 0.24 | 1.13 | 6.43 | 149.4 | - | - |
| Example 2 | 0.78 | 0.88 | 0.10 | 1.13 | 6.35 | 26.8 | - | - |

(continued)

| | Rotation speed (m/min) | | Speed difference (m/min) | Speed ratio | Tensile test results (25°C) | | Tensile test results (95°C) | |
|---|---|---|---|---|---|---|---|---|
| | Taking-up roller | Winding-up roller | | | Tensile strength (MPa) | Elongation rate (%) | Tensile strength (MPa) | Elongation rate (%) |
| Example 3 | 1.06 | 2.43 | 1.37 | 2.29 | 6.68 | 35.7 | 2.26 | 150 |
| Example 4 | 1.56 | 2.67 | 1.11 | 1.71 | 6.04 | 45.7 | 2.28 | 200 |
| Comparative Example 1 | 1.75 | 1.75 | 0.00 | 1.00 | 2.64 | 0.7 | - | - |
| Comparative Example 2 | 0.75 | 0.75 | 0.00 | 1.00 | 2.77 | 0.7 | 4.09 | 17 |

The raw material plastic sheet having a high filler content has small tensile strength and elongation rate (elongation until the test piece breaks) and, therefore, breaks immediately in usual conditions after the tensile stress is applied as in Comparative Examples 1 and 2. Therefore, when the sheet is used as it is, the application of use is limited, and the drawing processing is also difficult.

According to the results of the tensile test, the measurement results at 25°C show that performing of the bending remarkably improves the tensile strength and the elongation rate, the measurement results at 95°C show that performing of the bending remarkably improves the elongation rate at high temperature (95°C). That is to say, it is considered that the sheet having a high filler content, which has undergone the bending, has the improved strength and elongation (elongation rate) at ordinary temperature, and can easily correspond to the drawing treatment performed at about 95°C, and thus, the specific gravity of the sheet can be easily reduced.

<Comparative Examples 3 to 6>

Direct molding was performed wherein a high density polyethylene resin and calcium carbonate powder were blended with the mass ratio thereof varied and further magnesium stearate was added so that its content was 3 mass% relative to the both raw material, and the mixture was kneaded at setting temperature of 220°C and simultaneously, the raw material plastic sheet was extruded and molded by using a small-size biaxial kneading and extrusion-molding machine equipped with a T-die (manufactured by TECHNOVEL CORPORATION). In the conditions shown in Table 2, a molded sheet was once taken up from the die outlet to the taking-up roller, and then wound up to the winding-up roller immediately after the sheet was taken up so as to obtain a plastic sheet having an average thickness of 0.20 mm.

<Examples 5 to 8>

Rectangular solid objects were provided in two portions between the taking-up roller and the winding-up roller of the small-size biaxial kneading and extrusion-molding machine so as to provide parts for bending with respect to the rear surface and the front surface, as shown in Fig. 3. By using this facility, a sheet was formed in the same manner as in Comparative Example 3 except that the rotation speeds of the taking-up roller and the winding-up roller were set at the conditions shown in Table 2. Herein, an angle of the corner portion of solid object is 90 degrees.

Evaluation of strength and elongation of plastic sheet after treatment

A test piece was cut out from the above-obtained plastic sheet, and subjected to the tensile test under the same conditions mentioned above to measure the strength and the elongation rate at film breaking at 25°C. The results are shown in Table 2 as the tensile strength and the elongation rate, respectively.

[Table 2]

| | Calcium carbonate | PE | Rotation speed (m/min) | | Tensile test results (25°C) | | | |
|---|---|---|---|---|---|---|---|---|
| | | | | | TD direction | | MD direction | |
| | | | Taking-up roller | Winding-up roller | Tensile strength (MPa) | Elongation rate (%) | Tensile strength (MPa) | Elongation rate (%) |
| Comparative Example 3 | 50 | 50 | 0.94 | 0.92 | 14.5 | 233.5 | 16.8 | 279.0 |
| Comparative Example 4 | 65 | 35 | 0.85 | 0.85 | 10.2 | 46.1 | 11.5 | 117.5 |
| Comparative Example 5 | 70 | 30 | 0.80 | 0.80 | 8.0 | 9.8 | 10.5 | 10.2 |
| Comparative Example 6 | 75 | 25 | 0.84 | 0.84 | 4.0 | 1.0 | 5.2 | 0.9 |
| Example 5 | 50 | 50 | 0.94 | 2.21 | 14.9 | 241.2 | 16.2 | 272.4 |
| Example 6 | 65 | 35 | 0.80 | 1.91 | 12.0 | 146.8 | 11.5 | 138.3 |
| Example 7 | 70 | 30 | 0.76 | 1.83 | 7.3 | 64.5 | 9.3 | 81.5 |
| Example 8 | 75 | 25 | 0.79 | 1.9 | 6.0 | 31.3 | 8.5 | 37.3 |
| Note) PE is an abbreviation of polyethylene | | | | | | | | |

These results clarify that the bending of the present invention enables the strength and the elongation rate to be improved even in a plastic sheet having a high filler content, and furthermore, that the draw ratios can be set at various levels when the sheet is subjected to drawing processing.

EXPLANATION OF REFERENCE NUMERALS

1, 1A    solid object
11        raw material plastic sheet
12        solid object

**Claims**

1.    A process for manufacturing a plastic sheet, the process comprising a bending step including: bringing a raw material plastic sheet that contains filler in an amount of 50 mass% or more and 85 mass% or less into contact with a surface of a solid object in such a manner that the sheet is pushed against the surface of the solid object, in a course of transferring the sheet in a flow direction; allowing the sheet to be bent in the contact part, for generating a stress that acts on inside of the sheet; and thus treating the raw material plastic sheet.

2.    The process for manufacturing a plastic sheet according to claim 1, wherein the bending step is treatment including: bringing the raw material plastic sheet into contact with the surface of the solid object in such a manner that the sheet is pushed against the surface of the solid object, in a state in which the raw material plastic sheet is drawn in the flow direction and a tensile stress is applied to the inside of the sheet; and applying a normal stress in a thickness direction of the sheet in the contact part, for generating a stress inside the sheet.

3.    The process for manufacturing a plastic sheet according to claim 1 or 2, wherein the contact part includes a corner portion having an angle of 6 degrees or more and 120 degrees or less, in a sectional view parallel to the flow direction.

4.    The process for manufacturing a plastic sheet according to claim 1 or 2, wherein the contact part includes an R portion having a radius of curvature of 50 mm or less in a sectional view parallel to the flow direction.

5.   The process for manufacturing a plastic sheet according to any one of claims 1 to 4, wherein an average thickness of the raw material plastic sheet is 50 $\mu$m or more and 400 $\mu$m or less.

6.   The process for manufacturing a plastic sheet according to any one of claims 1 to 5, further comprising a drawing step of drawing the raw material plastic sheet, which has undergone the bending step, in a flow direction or/and a vertical direction.

[Fig.1]

[Fig.2]

[Fig. 3]

**INTERNATIONAL SEARCH REPORT**

| International application No. |
| --- |
| PCT/JP2014/077877 |

A. CLASSIFICATION OF SUBJECT MATTER
*B29C53/04*(2006.01)i, *B29C55/06*(2006.01)i, *B29L7/00*(2006.01)n

According to International Patent Classification (IPC) or to both national classification and IPC

B. FIELDS SEARCHED

Minimum documentation searched (classification system followed by classification symbols)
B29C53/04, B29C55/06, B29L7/00

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 9-327857 A (Oji-Yuka Synthetic Paper Co., Ltd.),<br>22 December 1997 (22.12.1997),<br>paragraphs [0008] to [0050]; fig. 1<br>(Family: none) | 1-5<br>6 |
| X<br>A | JP 9-300477 A (Oji-Yuka Synthetic Paper Co., Ltd.),<br>25 November 1997 (25.11.1997),<br>paragraphs [0007] to [0041]; fig. 1<br>(Family: none) | 1-5<br>6 |

[X] Further documents are listed in the continuation of Box C.    [ ] See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>   12 December, 2014 (12.12.14) | Date of mailing of the international search report<br>   22 December, 2014 (22.12.14) |
| --- | --- |
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/077877

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-277623 A (Lung Meng Environmental Friendly Paper Products Hong Kong (Holdings) Ltd.), 12 October 1999 (12.10.1999), claim 1; fig. 2 & US 6280680 B1          & TW 379272 B | 1-6 |
| A | JP 2013-010931 A (TBM Co., Ltd.), 17 January 2013 (17.01.2013), claim 1 & US 2014/0100328 A1     & EP 2716696 A1 & WO 2012/165311 A1     & TW 201302434 A & CN 103562281 A        & KR 10-2014-0007957 A | 1-6 |

Form PCT/ISA/210 (continuation of second sheet) (July 2009)

**REFERENCES CITED IN THE DESCRIPTION**

**Patent documents cited in the description**

- JP H11277623 A
- JP 2013010931 A